# EUROPEAN PATENT APPLICATION

(11) **EP 4 760 915 A1**
(43) Date of publication of application: **17.06.2026**
(21) Application number: 24907916.1
(22) Date of filing: 05.12.2024
(51) Int. Cl.: H01M 50/24, H01M 50/502, H01M 50/282, H01M 50/204

(54) **SECONDARY BATTERY MODULE**

(30) Priority: 22.12.2023 KR 20230190449
(71) Applicant: LG Energy Solution, Ltd., Seoul 07335 (KR)
(72) Inventor: KIM, Seok, Daejeon 34122 (KR); PARK, Sang Jun, Daejeon 34122 (KR); KIM, Gun Ryang, Daejeon 34122 (KR); YUN, Seong Guk, Daejeon 34122 (KR)
(74) Representative: BCKIP Part mbB
(86) International application number: PCT/KR2024/019825
(87) International publication number: WO 2025/135632

(57) **Abstract**

A secondary battery module of the present disclosure includes a battery cell stack in which a plurality of battery cells with protruding electrode leads and a plurality of protective pads are stacked, and each protective pad is inserted to be placed between neighboring battery cells; a housing frame in which the battery cell stack is accommodated therein to cover surfaces of the battery cell stack except for the surface where the electrode leads protrude; and a busbar assembly that is coupled to the housing frame to cover a direction where the electrode leads protrude from the battery cells, has a busbar where the electrode leads are electrically connected, and is formed with a fitting groove where ends of the protective pads are fitted and fixed, wherein the protective pads include a pad portion made of a material that is fire resistant or flame retardant and elastic, and a rigid body portion made of a material in the shape of a plate having greater rigidity than the pad portion.

## Description

### TECHNICAL FIELD

The present application claims priority to Korean Patent Application No. 10-2023-0190449 filed on December 22, 2023 in the Republic of Korea, the disclosures of which are incorporated herein by reference.

The present disclosure relates to a secondary battery module, and more specifically, to a secondary battery module capable of reducing the risk of explosion by preventing flame propagation to neighboring battery cells even if a fire occurs in at least one battery cell included in a battery cell stack.

### BACKGROUND ART

Demand for high-efficiency secondary batteries is rapidly increasing in the fields of portable devices and electric vehicles. Among such secondary batteries, lithium secondary batteries that have high energy density, maintain relatively high voltage, and have low self-discharge rate are commercialized and widely used, and research and development to improve performance thereof are being actively conducted.

Secondary batteries have a structure in which an electrode assembly and an electrolyte solution are embedded in a case such as a can or a pouch.

Among these, a pouch-type secondary battery has a structure in which an electrode assembly is mounted in the pouch. In this case, the electrode assembly has a structure in which a positive electrode, a separator, and a negative electrode are repeatedly stacked, wherein positive electrode tabs extending from each positive electrode are collected together and bonded to positive electrode leads (electrode leads with a positive electrode), and negative electrode tabs extending from each negative electrode are collected together and bonded to negative electrode leads (electrode leads with a negative electrode). And, the ends of the positive electrode leads and the negative electrode leads protrude from the pouch so as to be electrically connected to the outside.

Meanwhile, a plurality of secondary batteries mounted on a vehicle, an energy storage system (ESS), or the like are combined to form a secondary battery module to increase output and electricity storage capacity, and a plurality of secondary battery modules are combined to form a secondary battery pack. That is, a plurality of secondary batteries are collected together to be manufactured as a secondary battery module, and a plurality of secondary battery modules are collected together to be installed in a vehicle, an ESS, or the like in a state of being manufactured as a secondary battery pack.

When the pouch-type secondary battery is manufactured as a secondary battery module, the secondary batteries (battery cells) are stacked so that their flat surfaces are in contact with each other, and are provided as a battery cell stack 1 in a state where the secondary batteries are bound together by tape, cable, or the like, or by applying an adhesive to the surfaces in contact.

For reference, a protective pad 1b may be further provided between neighboring battery cells 1a to absorb contraction and expansion of the battery cells in the battery cell stack 1 and reduce heat generation.

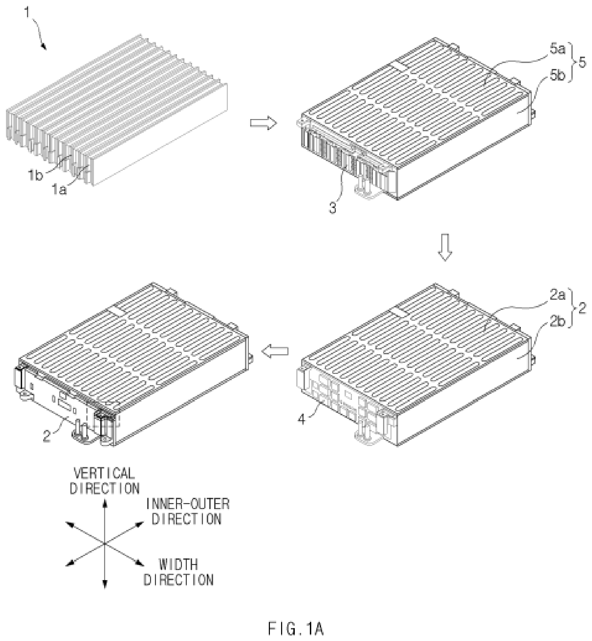

Referring to FIG. 1A, which sequentially shows states in which a secondary battery module is assembled according to a conventional method, that is, a state of a battery cell stack 1, a state in which the battery cell stack 1 is accommodated in a housing frame 5 and coupled to a busbar assembly (or a busbar frame) 3 in the inner-outer direction, a state in which an insulation cover 4 is coupled outside the busbar assembly 3, and a state in which an end plate 2 is coupled to the outer side of the insulation cover 4, wherein the battery cell stack 1 is accommodated in a housing frame 5 including a top frame 5a covering the upper surface and a side frame 5b covering the side surface to be protected from an external impact, and when the busbar assembly 3 is covered in the inner-outer direction, it is connected to the busbar mounted on the busbar assembly 3 and electrically connected to the outside. And, the insulation cover 4 and the end plate 2 are sequentially coupled to the outer side of the busbar assembly 3 to protect the busbar through which current flows.

And, a predetermined number of battery cells 1a in the battery cell stack 1 are stacked so that the electrode leads protrude in the same direction (either to both sides or to one side), and the protective pad 1b is inserted between the battery cells 1a to absorb the volume change due to contraction and expansion of the battery cells 1a.

That is, the battery cell stack 1 is subjected to temperature changes, mechanical loads, shocks, and vibrations depending on the environment in which it is mounted. The protective pad 1b is provided to protect the battery cell 1a from such external factors, and one or two or more battery cells 1a are disposed to be stacked between neighboring protective pads 1b.

A slit is perforated in the busbar assembly 3, and the electrode lead of each battery cell 1a passes through the slit and then connected to the busbar of the busbar assembly 3 by welding or the like. And, each busbar is electrically connected to a terminal that may be electrically connected to an external device.

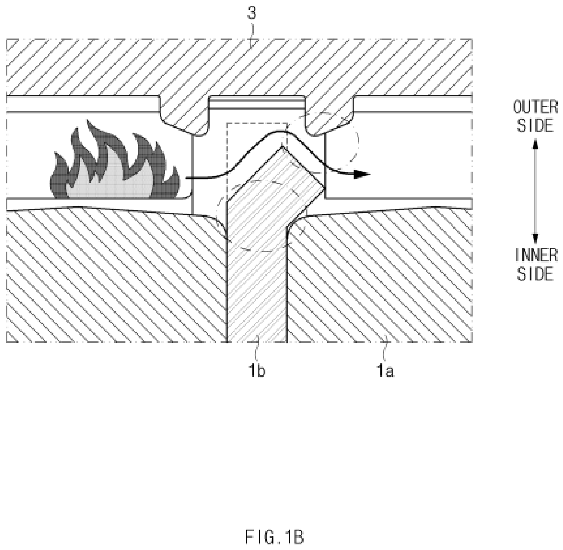

Meanwhile, referring to FIG. 1B, which is a cross-sectional view showing a state in which a fire occurs at a position where a battery cell stack 1 and a busbar assembly 3 meet in an assembled state as in FIG. 1A, in the conventional structure, when a fire occurs in a particular battery cell 1a, the end of the protective pad 1b fixed between the protrusions of the busbar assembly 3 (or fixed by a separate structure or groove) may be detached from the protrusions due to pressure. And, there was a possibility of the flame propagation through the space created by the deformation of the protective pad 1b.

In addition, not only the flames, but also the dust generated when a fire occurs may move to neighboring battery cells, thereby causing an electrical short and thus progressing to a thermal runway. The dust mentioned herein refers to small ash that is scattered by the reaction and/or explosion of the compounds within the corresponding battery cell 1a when a fire occurs in the battery cell.

That is, even if a fire occurs in the battery cell stack 1, there has been a need to suppress or block the propagation of flames and dust.

In particular, as the capacity and output of secondary battery modules mounted on transportation means such as vehicles increase, the stability risk also increases. Even if a fire occurs in the secondary battery module, it has been necessary to delay the thermal runaway as much as possible to secure the evacuation time of the passengers.

### SUMMARY

### TECHNICAL PROBLEM

Therefore, the present disclosure is directed to providing a secondary battery module capable of minimizing the gap between a battery cell stack and a busbar assembly and preventing the problem of a protective pad being detached from the busbar assembly in order to suppress or maximally delay the progression to thermal runaway even if a fire occurs in the battery cell.

### TECHNICAL SOLUTION

A secondary battery module provided in the present disclosure for achieving the above-described purpose includes a battery cell stack in which a plurality of battery cells with protruding electrode leads and a plurality of protective pads are stacked, and each protective pad is inserted to be placed between neighboring battery cells; a housing frame in which the battery cell stack is accommodated therein to cover surfaces of the battery cell stack except for the surface where the electrode leads protrude; and a busbar assembly that is coupled to the housing frame to cover a direction where the electrode leads protrude from the battery cells, has a busbar where the electrode leads are electrically connected, and is formed with a fitting groove where ends of the protective pads are fitted and fixed, wherein the protective pads include a pad portion made of a material that is fire resistant or flame retardant and elastic, and a rigid body portion made of a material in the shape of a plate having greater rigidity than the pad portion.

The pad portions are stacked in two to cover one surface and the other surface of the rigid body portion, respectively, with the rigid body portion interposed therebetween.

The protective pad is fitted into the fitting groove in a state where the pad portions cover the entire one surface and the other surface of the rigid body portion.

The fitting groove is formed with a slope to gradually increase in size from one side where the end of the protective pad enters to the other side, and thus the protective pad is allowed to move and elastically deform by the shape of the fitting groove in a state of being fitted into the fitting groove.

The busbar assembly has the fitting groove formed on an inward side facing the battery cell stack, and a busbar is coupled to an outer side thereof, wherein the chamber portion, which is an empty space, is provided between the busbar and the fitting groove.

The busbar assembly includes a plurality of bucket portions having an inwardly convex surface, and the plurality of bucket portions are disposed side by side along the longitudinal direction of the busbar assembly, wherein the chamber portion forming a space within each bucket portion is provided.

A busbar is coupled to outer sides of the selected bucket portions among the bucket portions.

A slit penetrating an inner surface and an outer surface of the busbar assembly is formed between the neighboring bucket portions, and electrode leads protruding from each battery cell are connected to the busbar through the slit.

The bucket portions are formed with fitting grooves on the inwardly convex surface.

Within the bucket portion, a rib is formed to protrude from the surface to reinforce rigidity or to partition the chamber portion.

The battery cell stack is provided in a shape in which an upper surface, a lower surface, and two side surfaces connecting the upper surface and the lower surface are formed between one side and the other side from which the electrode leads protrude, respectively, wherein the housing frame includes a top frame covering the upper surface of the battery cell stack; a bottom frame covering the lower surface of the battery cell stack; and a side frame covering the side surface of the battery cell stack, and a flame retardant sheet made of a material that is fire resistant or flame retardant is stacked between the top frame and the battery cell stack.

The flame retardant sheet is formed with a fastening portion that restrains an end of the protective pad, and the fastening portion includes two protrusions between which the end of the protective pad is placed.

In addition, a plurality of secondary battery modules provided in the present disclosure may be electrically connected to be provided as a secondary battery pack.

### ADVANTAGEOUS EFFECTS

In the present disclosure having the above configuration, the protective pad is configured to include a pad portion made of a material that is fire resistant or flame retardant and elastic, and a rigid body portion made of a material in the shape of a plate having greater rigidity than the pad portion, so that it is possible to prevent bending of the protective pad in the event of a fire. Accordingly, flame propagation and movement of dust (generated by fire) may be prevented, thereby suppressing the possibility of progression to thermal runway and blocking the occurrence of a short circuit, resulting in reducing the risk of explosion of the secondary battery module.

The pad portions are stacked in two to cover one surface and the other surface of the rigid body portion, respectively, with the rigid body portion interposed therebetween, so that the protective pad is fitted into the fitting groove in a state where the pad portions cover the entire one surface and the other surface of the rigid body portion. And, the fitting groove is provided to be formed with a slope to gradually increase in size from one side where the end of the protective pad enters to the other side. Accordingly, the protective pad is allowed to move and elastically deform by the shape of the fitting groove in a state of being fitted into the fitting groove. That is, in the present disclosure, the protective pad may move in a wider range in a state of being fixed to the busbar assembly, thereby absorbing contraction and expansion of the battery cell more efficiently, resulting in improving stability.

The busbar assembly is provided with the chamber portion, which is an empty space, between the busbar and the fitting groove, so that when an external impact is applied, the impact transmitted to the battery cell stack may be cushioned.

The plurality of bucket portions are disposed side by side along the longitudinal direction of the busbar assembly, and the chamber portion forming a space between the outer surface and the inner surface of each bucket portion is provided. Therefore, since the position where the protective pad is coupled to the busbar assembly is close to the battery cell stack (since the space through which flames and dust move becomes smaller), the possibility of thermal runaway and short circuit may be further reduced.

Between the outer surface and the inner surface of the bucket portion, a rib is formed to protrude from the surface to reinforce rigidity or to partition the chamber portion. Accordingly, the rigidity of the bucket portion may be made to meet the required conditions.

### BRIEF DESCRIPTION OF THE DRAWINGS

FIG. 1A is a view sequentially showing states in which a secondary battery module is assembled according to a conventional method, that is, a state of a battery cell stack, a state in which the battery cell stack is accommodated in a housing frame and coupled to a busbar assembly in the inner-outer direction, a state in which an insulation cover is coupled outside the busbar assembly, and a state in which an end plate is coupled to the outer side of the insulation cover.
FIG. 1B is a cross-sectional view showing a state in which a fire occurs at a position where a battery cell stack and a busbar assembly meet in an assembled state as in FIG. 1A.
FIG. 2 is a cross-sectional view showing a position where a battery cell stack and a busbar assembly meet in a secondary battery module provided in the present disclosure.
FIG. 3A is a view showing an inner side (the side facing a battery cell stack) of a busbar assembly provided in the present disclosure.
FIG. 3B is a view showing an outer side (the side where a busbar is coupled) of a busbar assembly provided in the present disclosure.
FIG. 4 is a cross-sectional view showing a state in which electrode leads protruding from a battery cell stack are connected to a busbar assembly in a secondary battery module provided in the present disclosure.
FIG. 5 is an enlarged view showing a part indicated by dotted lines in FIG. 4.
FIG. 6 is a cross-sectional view showing a state in which a protective pad of a battery cell stack is restrained by protrusions of a flame retardant sheet coupled to a housing frame in a secondary battery module provided in the present disclosure.
FIG. 7 is an enlarged view showing a part indicated by dotted lines in FIG. 6.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a secondary battery module in which the rigidity of a protective pad is reinforced to prevent thermal runaway even in the event of a fire, and a chamber portion is provided in a busbar assembly to protect a battery cell stack from external impact and to suppress the movement of flames and dust, and hereinafter, embodiments of the present disclosure will be described in more detail with reference to the accompanying drawings.

The present disclosure relates to a secondary battery module capable of minimizing the gap between a battery cell stack and a busbar assembly to suppress or maximally delay the progression to thermal runaway, and preventing a problem that a protective pad is separated from a busbar assembly, and hereinafter, embodiments provided in the present disclosure will be described in more detail with reference to the accompanying drawings.

The secondary battery module provided in the present disclosure is configured to include a battery cell stack 10, a housing frame 50, and a busbar assembly 30.

(Referring to FIG. 1A), the battery cell stack 10 provided in the present disclosure is configured by stacking a plurality of battery cells 12, wherein the battery cells 12 are provided as pouch-type secondary batteries, and the battery cells 12 are configured such that both electrode leads (a positive electrode lead and a negative electrode lead) protrude from the same end, or one protrudes from one end and the other protrudes from the other end.

And, a protective pad 11 is inserted between neighboring battery cells 12 to protect the battery cells 12 from external temperature changes, mechanical loads, external impacts, and vibrations, and to absorb volume changes due to contraction and expansion during charging and discharging of the battery cells 12.

That is, each protective pad 11 is inserted to be placed between neighboring battery cells 12, and one or two or more battery cells 12 are disposed to be placed between neighboring protective pads 11 depending on the use and design of the secondary battery module.

And, the housing frame 50 is coupled to cover the surfaces of the battery cell stack 10 except for the two surfaces from which the electrode leads protrude. That is, the battery cell stack 10 is accommodated inside the housing frame 50.

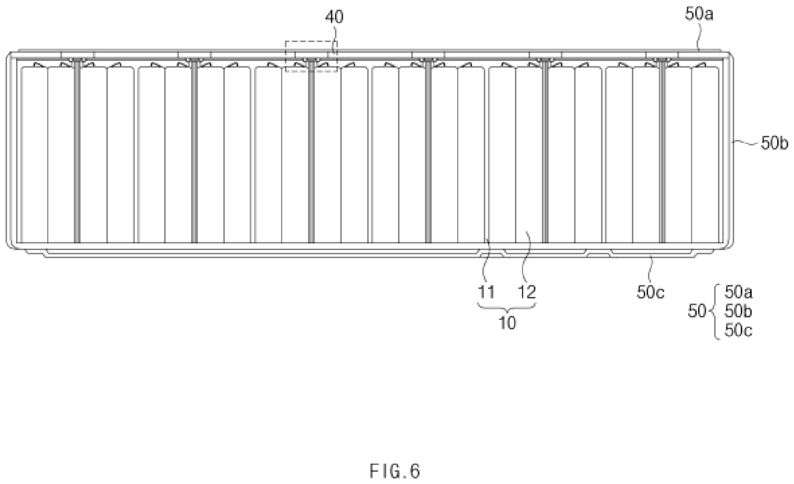

Referring to FIG. 1A and FIG. 6, the battery cell stack 10 is provided in a shape in which an upper surface, a lower surface, and two side surfaces connecting the upper surface and the lower surface are formed between one side and the other side from which the electrode leads protrude, respectively, wherein the housing frame 50 includes a top frame 50a covering the upper surface of the battery cell stack 10; a bottom frame 50c covering the lower surface of the battery cell stack 10; and a side frame 50b covering the side surface of the battery cell stack 10. In addition, to secure heat insulation from the outside and prevent or delay the spread of fire, a flame retardant sheet 40 made of a material that is fire resistant or flame retardant is coupled to at least the top frame 50a among the top frame 50a, the bottom frame 50c, and the side frame 50b. Therefore, the flame retardant sheet 40 is positioned between the housing frame 50 and the battery cell stack 10.

And, the busbar assembly 30 is coupled to the housing frame 50 to cover the exposed surface in a direction in which the electrode leads protrude from the battery cells 12. At this time, the busbar assembly 30 has a busbar 35 on an outer surface to which the electrode lead is electrically connected, and a fitting groove 31 is formed on an inner surface, so that the end of the protective pad 11 is fitted into the fitting groove 31 and fixed when coupled to the housing frame 50.

In addition, when the busbar assembly 30 is coupled, an insulation cover 60 and an end plate 20 are sequentially coupled to the outer surface of the busbar assembly 30 as in the conventional structure.

### Embodiment 1

In the present disclosure, a configuration having an improved protective pad 11 capable of preventing fire propagation to neighboring battery cells 12 when a fire occurs in the battery cell 12 is provided as Embodiment 1.

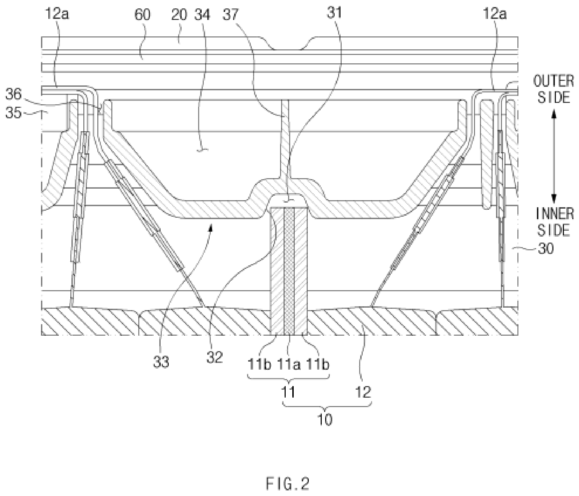

FIG. 2 is a cross-sectional view showing a position where a battery cell stack 10 and a busbar assembly 30 meet in a secondary battery module provided in the present disclosure.

Referring to FIG. 2, the protective pad 11 provided in this embodiment includes a pad portion 11b made of a material that is fire resistant or flame retardant and elastic, and a rigid body portion 11a made of a material in the shape of a plate having greater rigidity than the pad portion 11b.

The rigid body portion 11a may be made of a metal material or an engineering plastic, and is manufactured to have sufficiently greater rigidity than the pad portion 11b. And, it is manufactured to enable appropriate elastic deformation (e.g., bending) according to contraction and expansion of the battery cells 12 disposed on both sides.

And, the pad portion 11b may be made of the same material as the conventional protective pad, for example, a synthetic resin material such as polyurethane, polypropylene, silicone, or the like, to have the same characteristics as the conventional protective pad, and the thickness and detailed specifications (elastic deformation amount or the like) thereof may be determined according to the required specifications.

In this embodiment, the pad portions 11b are stacked in two to cover one surface and the other surface of the rigid body portion 11a, respectively, with the rigid body portion 11a interposed therebetween. That is, the protective pad 11 is fitted into the fitting groove 31 in a state where the pad portions 11b cover the entire one surface and the other surface of the rigid body portion 11a.

The fitting groove 31 is formed with a slope 32 to gradually increase in size from one side where the end of the protective pad 11 enters to the other side, and thus the protective pad 11 is allowed to move and elastically deform (bend) by the shape of the fitting groove 31 in a state of being fitted into the fitting groove 31.

And, a gap of a predetermined size may be provided to be formed between the end of the protective pad 11 and the fitting groove 31.

Accordingly, even if a fire occurs on one side of the protective pad 11, the rigid body portion 11a having greater rigidity may support the pressure, thereby preventing the fire from spreading to the other side. That is, since the protective pad 11 provided in this embodiment may allow the rigid body portion 11a to maintain the original shape thereof, it may prevent flame propagation and movement of dust, thereby suppressing the possibility of progression to thermal runway and blocking the occurrence of a short circuit.

Additionally, the fitting groove 31 restraining the end of the protective pad 11 is formed with a slope 32 to gradually increase in size from one side where the end of the protective pad 11 enters to the other side, and a gap of a predetermined size is provided (within a range where the detachment of the protective pad is prevented), so that when the battery cell 12 contracts and expands, the protective pad 11 may move in a wider range and absorb the volume change of the battery cell 12.

### Embodiment 2

In the present disclosure, a configuration having a busbar assembly 30 capable of reducing the gap between the battery cell stack 10 and the busbar assembly 30, and more efficiently protecting the battery cell stack 10 from external impact so as to reduce the possibility of fire propagation to neighboring battery cells 12 when the fire occurs in the battery cell 12 is provided as Embodiment 2.

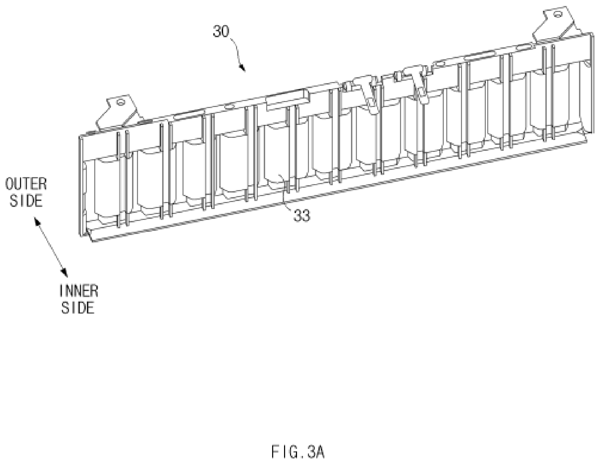

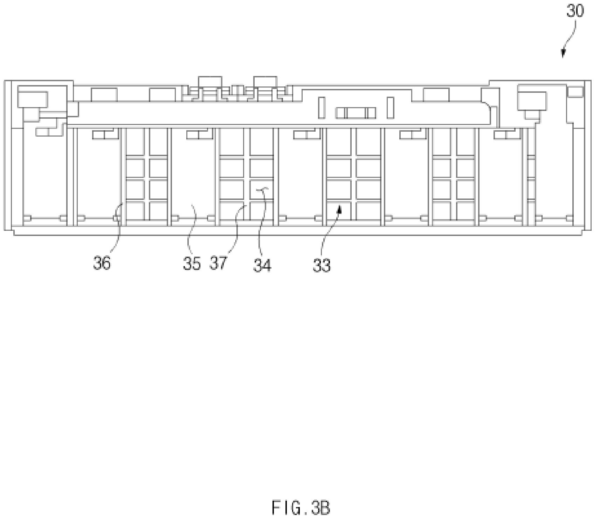

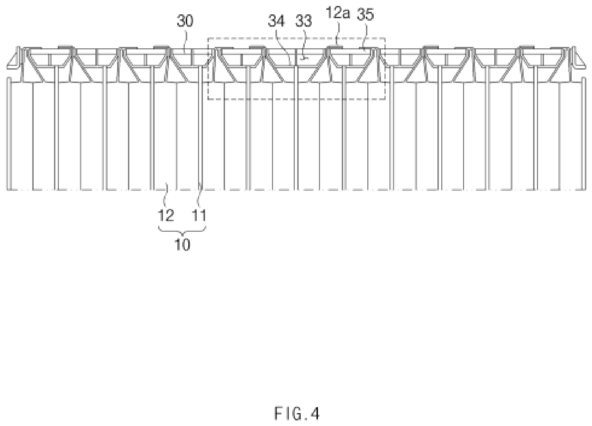

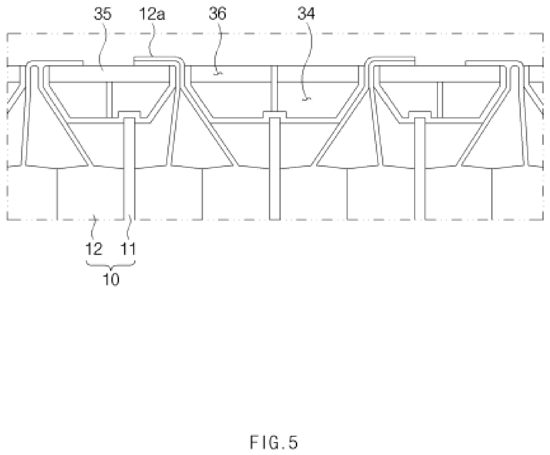

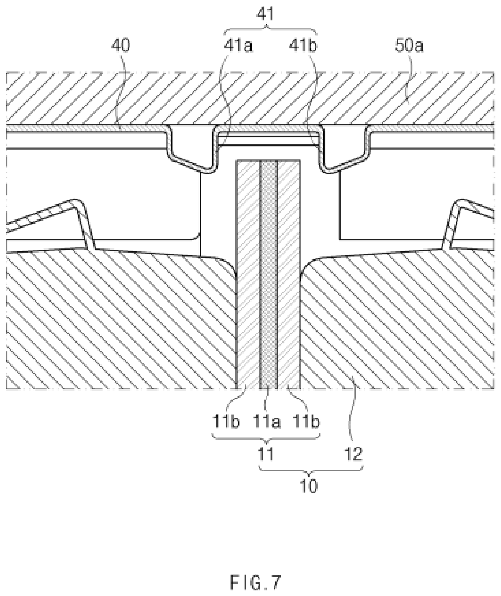

FIG. 3A is a view showing an inner side (the side facing a battery cell stack) of a busbar assembly 30 provided in the present disclosure, and FIG. 3B is a view showing an outer side (the side where a busbar is coupled) of a busbar assembly 30 provided in the present disclosure. And, FIG. 4 is a cross-sectional view showing a state in which electrode leads 12a protruding from a battery cell stack 10 are connected to a busbar assembly 30 in a secondary battery module provided in the present disclosure, and FIG. 5 is an enlarged view showing a part indicated by dotted lines in FIG. 4. FIG. 6 is a cross-sectional view showing a state in which a protective pad 11 of a battery cell stack 10 is restrained by protrusions 41 of a flame retardant sheet 40 coupled to a housing frame 50 in a secondary battery module provided in the present disclosure, and FIG. 7 is an enlarged view showing a part indicated by dotted lines in FIG. 6.

Referring to FIGS. 3A and 3B, the busbar assembly 30 provided in this embodiment is configured to include a plurality of bucket portions 33 that form a closed or open space between the inner surface facing the battery cell stack 10 and the outer surface opposite thereto when coupled to the housing frame 50.

As shown in FIG. 3A, the bucket portions 33 have a shape that is formed long in the vertical direction (see indication of direction in FIG. 1A), and are disposed in plurality side by side (transversely) along the longitudinal direction (a direction corresponding to the width direction based on FIG. 1A or the left-right direction based on FIG. 3A) of the busbar assembly 30.

The bucket portion 33 has an inwardly convex surface, and a chamber portion 34 forming a space is provided therein. That is, as shown in FIGS. 2, 4, and 5, the busbar assembly 30 has a fitting groove 31 formed on an inward side facing the battery cell stack 10, and a busbar 35 is coupled to an outer side, wherein the chamber portion 34 that is an empty space is provided between the busbar 35 and the fitting groove 31.

And, a metal busbar 35 is coupled to the outer surface of all the bucket portions 33 or the outer surface of selected bucket portions 33. Each of the busbars 35 is electrically connected to a terminal connected to an external charging and discharging device.

Meanwhile, a slit 36 penetrating inner and outer surfaces of the busbar assembly 30 is formed between the neighboring bucket portions 33 in the busbar assembly 30 as shown in FIG. 2, and the electrode lead 12a protruding from each battery cell 12 passes through the busbar assembly 30 through the slit 36 and then is connected to the busbar 35 through welding as shown in FIGS. 4 and 5.

The fitting groove 31 where the end of the protective pad 11 stacked on the battery cell stack 10 is fitted and restrained is formed on the inwardly convex surface of the bucket portion 33. At this time, the fitting groove 31 may be formed in all the bucket portions 33 or only in pre-selected bucket portions 33.

In addition, between the outer surface and the inner surface of the bucket portion 33, a rib 37 is formed to protrude from the surface to reinforce rigidity, or to partition the chamber portion 34. The thickness, length, and shape of the rib 37 may be determined according to the rigidity required for the busbar assembly 30 and the size and shape of the chamber portion 34.

In addition, as described above, the battery cell stack 10 is provided in a shape in which an upper surface, a lower surface, and two side surfaces connecting the upper surface and the lower surface are formed between one side and the other side from which the electrode leads 12a protrude, respectively. The housing frame 50 provided in this embodiment is configured to include a top frame 50a covering the upper surface of the battery cell stack 10, a bottom frame 50c covering the lower surface of the battery cell stack 10, and a side frame 50b covering the side surfaces of the battery cell stack 10, as shown in FIG. 6.

And, a flame retardant sheet 40 is coupled to the inside of the top frame 50a. Accordingly, a flame retardant sheet 40 made of a material that is fire resistant or flame retardant is positioned between the top frame 50a and the battery cell stack 10.

The flame retardant sheet 40 is formed with a fastening portion 41 to restrain the upper end of the protective pad 11. As shown in FIG. 7, the flame retardant sheet 40 has a thin thickness, so that it is difficult to form the fastening portion 41 in a groove shape. Accordingly, the flame retardant sheet 40 provided in this embodiment is partially bent as shown to form the fastening portion 41 in the form of protrusions 41a, 41b.

Two protrusions 41a, 41b formed on the flame retardant sheet 40 are formed to be spaced apart from each other to form a groove therebetween, and the end of the protective pad 11 is fitted between the protrusions 41a, 41b.

In the busbar assembly 30 provided in this embodiment, the chamber portion 34, which is an empty space, is provided between the busbar 35 and the fitting groove 31, so that when an external impact is applied, the impact transmitted to the battery cell stack 10 may be cushioned.

In addition, in the present disclosure, a plurality of secondary battery modules having the technical features of each of Embodiments 1 and 2 described above may be electrically connected to provide a secondary battery pack.

In the present disclosure having the above configuration, the protective pad 11 is configured to include a pad portion 11b made of a material that is fire resistant or flame retardant and elastic, and a rigid body portion 11a made of a material in the shape of a plate having greater rigidity than the pad portion 11b, so that it is possible to prevent bending of the protective pad 11 in the event of a fire. Accordingly, flame propagation and movement of dust (generated by fire) may be prevented, thereby suppressing the possibility of progression to thermal runway and blocking the occurrence of a short circuit, resulting in reducing the risk of explosion of the secondary battery module.

The pad portions 11b are stacked in two to cover one surface and the other surface of the rigid body portion 11a, respectively, with the rigid body portion 11a interposed therebetween, so that the protective pad 11 is fitted into the fitting groove 31 in a state where the pad portions 11b cover the entire one surface and the other surface of the rigid body portion 11a. And, the fitting groove 31 is provided to be formed with a slope 32 to gradually increase in size from one side where the end of the protective pad 11 enters to the other side. Accordingly, the protective pad 11 is allowed to move and elastically deform by the shape of the fitting groove 31 in a state of being fitted into the fitting groove 31. That is, in the present disclosure, the protective pad 11 may move in a wider range in a state of being fixed to the busbar assembly 30, thereby absorbing contraction and expansion of the battery cell 12 more efficiently, resulting in improving stability.

The busbar assembly 30 is provided with the chamber portion 34, which is an empty space, between the busbar 35 and the fitting groove 31, so that when an external impact is applied, the impact transmitted to the battery cell stack 10 may be cushioned.

The plurality of bucket portions 33 are disposed side by side along the longitudinal direction of the busbar assembly 30, and the chamber portion 34 forming a space between the outer surface and the inner surface of each bucket portion 33 is provided. Therefore, since the position where the protective pad 11 is coupled to the busbar assembly 30 is close to the battery cell stack 10 (since the space through which flames and dust move becomes smaller), the possibility of thermal runaway and short circuit may be further reduced.

Between the outer surface and the inner surface of the bucket portion 33, a rib 37 is formed to protrude from the surface to reinforce rigidity or to partition the chamber portion. Accordingly, the rigidity of the bucket portion 33 may be made to meet the required conditions.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Battery cell stack
11: Protective pad
12: Battery cell
20: End plate
30: Busbar assembly
40: Flame retardant sheet
50: Housing frame

## Claims

1. A secondary battery module, comprising:
a battery cell stack in which a plurality of battery cells with protruding electrode leads and a plurality of protective pads are stacked, and each of the plurality of protective pads is inserted to be placed between neighboring battery cells;
a housing frame in which the battery cell stack is accommodated therein to cover surfaces of the battery cell stack except for the surface where the electrode leads protrude; and
a busbar assembly that is coupled to the housing frame to cover a direction where the electrode leads protrude from the battery cells, has a busbar where the electrode leads are electrically connected, and is formed with a fitting groove where ends of the protective pads are fitted and fixed,
wherein the protective pads comprise a pad portion made of a material that is fire resistant or flame retardant and elastic, and a rigid body portion made of a material in the shape of a plate having greater rigidity than the pad portion.

2. The secondary battery module according to claim 1,
wherein the pad portions are stacked in two to cover one surface and the other surface of the rigid body portion, respectively, with the rigid body portion interposed therebetween.

3. The secondary battery module according to claim 2,
wherein the protective pad is fitted into the fitting groove in a state where the pad portions cover the entire one surface and the other surface of the rigid body portion.

4. The secondary battery module according to claim 3,
wherein the fitting groove is formed with a slope to gradually increase in size from one side where the end of the protective pad enters to the other side opposite to the one side, and thus the protective pad is allowed to move and elastically deform by the shape of the fitting groove in a state of being fitted into the fitting groove.

5. The secondary battery module according to any one of claims 1 to 4,
wherein the busbar assembly has the fitting groove formed on an inward side facing the battery cell stack, and a busbar is coupled to an outer side thereof,
wherein a chamber portion, which is an empty space, is provided between the busbar and the fitting groove.

6. The secondary battery module according to claim 5,
wherein the busbar assembly comprises a plurality of bucket portions having an inwardly convex surface, and the plurality of bucket portions are disposed side by side along the longitudinal direction of the busbar assembly,
wherein the chamber portion forming a space within each bucket portion is provided.

7. The secondary battery module according to claim 6,
wherein a busbar is coupled to outer sides of the selected bucket portions among the bucket portions.

8. The secondary battery module according to claim 7,
wherein a slit penetrating an inner surface and an outer surface of the busbar assembly is formed between the neighboring bucket portions, and electrode leads protruding from each battery cell are connected to the busbar through the slit.

9. The secondary battery module according to claim 6,
wherein the bucket portions are formed with the fitting grooves on the inwardly convex surface.

10. The secondary battery module according to claim 6,
wherein within the bucket portion, a rib is formed to protrude from the surface to reinforce rigidity or to partition the chamber portion.

11. The secondary battery module according to any one of claims 1 to 4,
wherein the battery cell stack is provided in a shape in which an upper surface, a lower surface, and two side surfaces connecting the upper surface and the lower surface are formed between one side and the other side from which the electrode leads protrude, respectively,
wherein the housing frame comprises a top frame covering the upper surface of the battery cell stack; a bottom frame covering the lower surface of the battery cell stack; and a side frame covering the side surface of the battery cell stack, and
a flame retardant sheet made of a material that is fire resistant or flame retardant is stacked between the top frame and the battery cell stack.

12. The secondary battery module according to claim 11,
wherein the flame retardant sheet is formed with a fastening portion that restrains an end of the protective pad, and
the fastening portion comprises two protrusions between which the end of the protective pad is placed.

13. A secondary battery pack in which a plurality of secondary battery modules of claim 1 are electrically connected.
